(19) Europäisches Patentamt
European Patent Office
Office européen des brevets

(11) **EP 3 418 789 A1**

(12) **EUROPÄISCHE PATENTANMELDUNG**

(43) Veröffentlichungstag:
**26.12.2018 Patentblatt 2018/52**

(51) Int Cl.:
***G02B 21/24*** *(2006.01)*

(21) Anmeldenummer: **17001037.5**

(22) Anmeldetag: **20.06.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Euroimmun Medizinische Labordiagnostika AG**
**23560 Lübeck (DE)**

(72) Erfinder:
• **Hagen-Eggert, Martin**
**23568 Lübeck (DE)**
• **Morrin, Markus**
**23564 Lübeck (DE)**
• **Müller, Matthias**
**23562 Lübeck (DE)**
• **Pannhoff, Helge**
**20535 Hamburg (DE)**
• **Sumpf, Tilman Johannes**
**23552 Lübeck (DE)**

(54) **VERFAHREN UND MIKROSKOPIESYSTEM ZUM AUFNEHMEN EINES BILDES**

(57)      Bereitgestellt sind ein Verfahren und ein Mikroskopiesystem zum Aufnehmen eines Bildes eines Probenbereichs (2), aufweisend: Relatives Verfahren eines Objektivs (3) und des Probenbereichs (2) entlang einer optischen Achse (13) des Objektivs (3); Richten eines Lichtstrahls (19) durch das Objektiv (3) auf den Probenbereich (2), der mindestens eine Grenzfläche (59), insbesondere drei Grenzflächen (55, 57, 59), enthält; Auslesen von Intensitätswerten des an der Grenzfläche reflektierten und durch das Objektiv tretenden Lichtstrahls, die von Pixeln eines zweidimensionalen Teilbereichs (65) einer Detektionsfläche (29) einer Mikroskopkamera (8) detektiert wurden; Bestimmen, für eine Relativverfahrposition (Z), des Maximums (73, 75, 77) von über eine vorbestimmte Fläche (66) aggregierten, insbesondere summierten, ausgelesenen Intensitätswerten innerhalb des Teilbereichs (65); Assoziieren des Maximums mit der Relativverfahrposition (Z); Bestimmen mindestens einer Bezugsrelativverfahrposition aus mindestens einem lokalen Maximum eines Verlaufs (67) der Maxima (73, 75, 77) in Abhängigkeit der Relativverfahrposition (Z); Einstellen der Relativverfahrposition zum Aufnehmen eines Bildes basierend auf der Bezugsrelativverfahrposition; und Auslesen im Wesentlichen aller Pixel der Detektionsfläche (29) der Mikroskopkamera zum Aufnehmen des Bildes, insbesondere Fluoreszenzbildes, des Probenbereichs.

Fig. 1

EP 3 418 789 A1

**Beschreibung**

Die vorliegende Erfindung betrifft ein Verfahren zum Aufnehmen eines Bildes eines Probenbereichs, insbesondere zum Aufnehmen eines Fluoreszenzbildes, und betrifft ferner ein Mikroskopiesystem zum Aufnehmen eines Bildes eines Probenbereichs.

DE 10 2008 015 885 A1 beschreibt ein Verfahren zur Autofokussierung von optischen Geräten, wobei eine Messlichtquelle und ein Objektiv zur Abbildung eines von der Messlichtquelle ausgehenden im Wesentlichen parallelen Strahlenbündels auf ein Beobachtungsobjekt zur Erzeugung eines Reflexionsbildes vorgesehen sind, wobei weiterhin eine Auswerte- und Einstelleinheit vorgesehen ist, welche geeignet ist, aus dem Reflexionsbild die Fokuslage zu ermitteln und das Objektiv zu positionieren. Dabei wird ein Bild mit konzentrischen Ringen aufgenommen, deren Durchmesser sich in Abhängigkeit von dem Abstand zu der korrekten Fokusposition ändert.

WO 2016/133787 A1 offenbart Verfahren und Systeme zum automatischen Fokussieren eines Mikroskops an einer Probe und zum Aufnehmen eines fokussierten Bildes der Probe. Die aufgenommenen Messungen werden analysiert, um zu bestimmen, welche Messung einen Peak aufweist, wobei als Peakwert eine Messung von einem reflektierten Lichtstrahl verstanden ist, welcher eine maximale Intensität als eine Funktion der Position des Substrats entlang der optischen Achse des Mikroskops in Bezug auf die Position der Objektivlinse bedeutet.

DE 10 2014 002 584 offenbart ein Verfahren und eine Optikvorrichtung zur Abbildung eines innerhalb eines dreidimensionalen Probenbereichs befindlichen Objekts, wobei ein Tiefenprofil des Probenbereichs mittels optischer Kohäreriz-Interferometrie ermittelt wird, ein Peak in dem Tiefenprofil erkannt wird, der von einer Reflexion an einem Objektpunkt herrührt, eine optische-Weglänge-Position des Peaks bestimmt wird und wobei eine geometrische-Weglänge-Position des Objektpunktes basierend darauf berechnet wird.

Schließlich wird das Mikroskop basierend auf der geometrische-Weglänge-Position zum Abbilden des Objektes fokussiert.

Konventionell sind Mikroskopbilder an verschiedenen Tiefenpositionen (Z-Positionen) aufgenommen worden, wobei die optimale Fokusposition über eine Auswertung der Strukturschärfe der bildaufnahmen bestimmt wurde. Dieses Verfahren ist jedoch relativ zeitraubend, so dass eine Hochdurchsatz-Abarbeitung einer Vielzahl von Proben erschwert ist.

Die Verfahren und Systeme des Standes der Technik können somit nicht unter allen Bedingungen eine schnelle und zuverlässige Fokussierung von Proben in der Mikroskopie, insbesondere Fluoreszenzmikroskopie, gewährleisten.

Daher gibt es einen Bedarf für ein Verfahren und ein Mikroskopiesystem zum Aufnehmen eines Bildes eines Probenbereichs, wobei eine schnelle und zuverlässige Fokussierung, insbesondere eines in einem dreidimensionalen Probenbereich eingebetteten Objekts, gewährleistet werden kann.

Der Bedarf wird durch die Gegenstände der unabhängigen Ansprüche befriedigt, welche auf ein Verfahren bzw. auf ein Mikroskopiesystem zum Aufnehmen eines Bildes eines Probenbereichs gerichtet sind. Die abhängigen Ansprüche spezifizieren besondere Ausführungsformen der vorliegenden Erfindung,

Gemäß einer Ausführungsform der vorliegenden Erfindung ist bereitgestellt ein Verfahren zum Aufnehmen eines Bildes eines Probenbereichs, aufweisend: Relatives Verfahren eines Objektivs und des Probenbereichs entlang einer optischen Achse des Objektivs; Richten eines Lichtstrahls durch das Objektiv auf den Probenbereich, der mindestens eine Grenzfläche, insbesondere drei Grenzflächen, enthält; Auslesen von Intensitätswerten des an der Grenzfläche reflektierten und durch das Objektiv tretenden Laserstrahls, die von Pixeln eines zweidimensionalen Teilbereichs einer Detektionsfläche einer Mikroskopkamera detektiert wurden; Bestimmen, für eine Relativverfahrposition, des Maximums von über eine vorbestimmte Fläche aggregierten, insbesondere summierten, Intensitätswerten der ausgelesenen Intensitätswerte innerhalb des Teilbereichs; Assoziieren des Maximums mit der Retativverfahrposition, Bestimmen mindestens einer Bezugsrelativverfahrposition aus mindestens einem lokalen Maximum eines Verlaufs der Maxima in Abhängigkeit der Relativverfahrposition; Einstellen der Relativverfahrposition zum Aufnehmen eines Bildes basierend auf der Bezugsrelativverfahrposition; und Auslesen im Wesentlichen aller Pixel der Detektionsfläche der Mikroskopkamera zum Aufnehmen des Bildes, insbesondere Fluoreszenzblides, des Probenbereichs.

Vor dem Auslesen im Wesentlichen aller Pixel der Detektionsfläche der Mikroskopkamera kann die Quelle des Lichtstrahls deaktiviert werden und eine Fluoreszenzlichtquelle kann aktiviert werden. Der Lichtstrahl (insbesondere kollimiertes (im Wesentlichen paralleles) Strahlenbündel) kann z.B, von einem Laser oder einer Superlumineszenzdiode erzeugt sein.

Der Lichtstrahl kann elektromagnetische Strahlung im sichtbaren und/oder unsichtbaren Wellenlängenbereich (z.B. Infrarot, Ultraviolett) umfassen. Die Lichtquelle ist Quelle dieser Strahlung,

Das Verfahren kann mit einem Mikroskopiesystem gemäß einer Ausführungsform der vorliegenden Erfindung durchgeführt werden.

Bei dem Probenbereich kann es sich um einen in drei Dimensionen ausgedehnten Probenbereich handeln, welcher somit in zwei lateralen Richtungen ausgedehnt ist sowie in einer dazu senkrechten Tiefenrichtung ausgedehnt ist. Insbesondere kann innerhalb des Probenbereichs in einer bestimmten Tiefe eine (biologische) Probe befindlich sein, von welcher ein fokussiertes Bild, insbesondere Fluoreszenzbild, aufzunehmen ist. Das Verfahren (und das Mikroskopiesystem) kann somit insbesondere in der Autoimmundiagnostik zur Evaluierung von Immunfluoreszenz-Präparaten eingesetzt werden. Insbesondere können das Verfahren und das Mikroskopiesystem einen Indirekten Immunfluoreszenz-Test (IIFT) unterstützen. Das Verfahren kann eine rasche Abarbeitung der zu befundenen Proben sicherstellen, was eine schnelle Fokussierung der Proben erfordert.

Das Objektiv kann eine oder mehrere Linsen umfassen, welche hintereinander entlang der optischen Achse des Objektivs angeordnet sein können. Das Objektiv kann zum Beispiel eine 10-fache, 20-fache oder zum Beispiel 40-fache Vergrößerung bereitstellen und beispielhaft eine numerische Apertur von zwischen 0,3 und 0,8 aufweisen. Das letztendlich für eine Aufnahme des Bildes herangezogene von dem Probenbereich ausgehende Licht kann sichtbares Licht umfassen, zum Beispiel grünes Licht, rotes Licht und/oder blaues Licht und kann insbesondere durch Fluoreszenzemission nach Fluoreszenzanregung aus dem Probenbereich ausgesendet worden sein.

Der (Tiefen-)Bereich, in dem die Probe in der Objektebene des Mikroskops scharf abgebildet wird, die sogenannte Schärfentiefe, ist dabei abhängig von der numerischen Apertur NA des Objektivs. Dabei besteht zwischen der Schärfentiefe $t_w$, der Schwerpunktswellenlänge $\lambda_0$ des abzubildenden Lichtspektrums und der numerischen Apertur NA der folgende Zusammenhang:

$$t_w = \lambda_0/NA^2$$

Die Schärfentiefe kann zum Beispiel zwischen 500 nm und 6000 nm, insbesondere zwischen 700 nm und 1100 nm, liegen. Ausführungsformen der vorliegenden Erfindung können die Bezugsrelativverfahrposition mit einer Genauigkeit bestimmen, welche im Wesentlichen der Schärfentiefe des Objektivs gleicht. Damit kann eine zuverlässige Fokussierung gewährleistet werden.

Zum relativen Verfahren des Objektivs und des Probenbereichs kann Objektiv und/oder der Probenbereich verfahren werden. Dabei wird der Abstand zwischen Objektiv und Probenbereich variiert, es erfolgt eine Relativbewegung zwischen Objektiv und Probenbereich.

Zum relativen Verfahren (bzw. Bewegen entlang der z-Richtung, d.h. der Tiefenrichtung) des Objektivs und des Probenbereichs kann der Probenbereich z.B. relativ zu einem feststehenden Objektiv bewegt werden oder das Objektiv kann relativ zu einem feststehenden Probenbereich (in Z-Richtung, das heißt Tiefenrichtung) bewegt werden.

Ein verwendeter Laser als beispielhafte kollimierte Strahlungsquelle kann zum Beispiel ein Emissionsspektrum im sichtbaren roten Wellenlängenbereich aufweisen. Insbesondere kann dieser Laserstrahl Wellenlängen aufweisen, welche mit Wellenlängen überlappen, welche zum Aufnehmen des Bildes des Probenbereichs vorgesehen sind. Zum Beispiel kann die Wellenlänge des Laserstrahls mit einem Emissionsspektrum überlappen, welches in der Fluoreszenzmikroskopie detektiert wird. Somit ist lediglich eine (einzige) Mikroskopkamera erforderlich, um einerseits eine Fokussierung und andererseits die beabsichtigte Aufnahme des Bildes zu unterstützen. Der Laserstrahl kann zum Beispiel mithilfe eines Strahlteilers in den Strahlengang des Objektivs eingekoppelt werden. Eine Querschnittsauadehnung des Laserstrahls kann vorzugsweise im Wesentlichen gleich einem Durchmesser des Eintrittsbereichs, der Pupillenöffnung, des Objektivs gleichen.

Die mindestens eine Grenzfläche kann zum Beispiel eine ebene Grenzfläche sein, zum Beispiel zwischen einem festen Material und Luft, zwischen einem festen Material und einer Flüssigkeit oder zwischen einem festen Material und einer (organischen) Probe. Das Vorhandensein der mindestens einen Grenzfläche kann eine Fokussierung erleichtern bzw. eine Zuverlässigkeit der Fokussierung erhöhen.

Die Mikroskopkamera kann konventionell zum Aufnehmen des Bildes vorgesehen sein, wobei das Bild durch die Gesamtheit der Intensitätswerte aller Pixel der Detektionsfläche der Mikroskopkamera gebildet sein kann. Zur Fokussierung (insbesondere zur Bestimmung der Bezugsrelativverfahrposition) werden jedoch nur Pixel eines zweidimensionalen Teilbereichs der gesamten Detektionsfläche der Mikroskopkamera ausgelesen, ohne (zeitaufwendig) die restlichen Pixel der Detektionsfläche außerhalb des Teilbereichs auslesen zu müssen. Dadurch kann das Verfahren beschleunigt werden. Der zweidimensionale Teilbereich kann zum Beispiel eine Größe haben, die zwischen 5% und 20% der gesamten Detektionsfläche liegt.

In verschiedenen Richtungen von einem Punkt in der objektseitigen Brennebene des Objektivs ausgehende Lichtstrahlen können durch das Objektiv zu parallelen Strahlen gebrochen werden, so dass hinter (bzw, lichtstromabwärts) dem Objektiv ein paralleles Strahlenbündel vorliegen kann. Eine dem Objektiv nachgeschaltete Linse (wie zum Beispiel die unten erwähnte Tubuslinse) kann die parallelen Strahlen in einer bildseitigen Brennebene dieser weiteren Linse in einem Punkt sammeln. Dabei kann die Detektionsfläche der Mikroskopkamera in der bildseitigen Brennebene dieser weiteren Linse (zum Beispiel Tubuslinse) liegen. Bei der Detektionsfläche kann es sich zum Beispiel um ein Array oder ein Feld (insbesondere zweidimensionales Feld) von lichtempfindlichen Zellen handeln, zum Beispiel CCD- oder CMOS-lichtempfindlichen Zellen.

Während der Abstand zwischen dem Objektiv und dem Probenbereich in der Tiefenrichtung variiert wird, werden ständig bzw. andauernd die intensltätswerte der Pixel des zweidimensionalen Teilbereichs ausgelesen und für jede Relatiwerfahrposition (das heißt für jeden Abstand zwischen Objektiv und Probenbereich) wird das Maximum der Intensitätswerte der Pixel bestimmt, welche eine vorbestimmte Fläche überdecken.

Zum Beispiel kann innerhalb des Teilbereichs das Maximum eines (das heißt genau eines) Pixels für eine jeweilige Relativverfahrposition bestimmt werden. Je nach Größe der verwendeten Pixel können jedoch auch mehr als ein Pixel herangezogen werden. Dabei können zum Beispiel die Intensitätswerte des mehr als einen Pixels aufsummiert oder gemittelt werden. Die Größe der vorbestimmten Fläche kann so gewählt sein, dass sichergestellt ist, dass im Wesentlichen nur Licht, welches aus oder von einem Punkt in der objektseitigen Brennebene des Objektivs in verschiedenen Richtungen ausgesendet wird, durch die Pixel der vorbestimmten Fläche detektiert wird. Somit kann nicht von der Objektebene des Objektivs ausgehendes Licht von der Detektion ausgeschlossen werden. Die vorbestimmte Fläche kann somit eine Funktion einer Lochblende in herkömmlichen Verfahren ausführen. Die Größe der vorbestimmten Fläche kann an die gewünschte Anwendung angepasst werden, zum Beispiel um eine gewünschte Genauigkeit einer Fokuspositionsbestimmung zu ermöglichen. Die Größe der vorbestimmten Fläche kann zum Beispiel einige Quadratmikrometer betragen.

Jedes derart bestimmte Maximum wird mit der zugehörigen Relativerfahrposition (das heißt Abstand zwischen Objektiv und Probenbereich) verknüpft bzw. assoziiert. Somit wird eine Vielzahl von Maxima für die Vielzahl der verschiedenen Relativverfahrpositionen bestimmt. Der Verlauf der Maxima für verschiedene Relativverfahrpositionen kann dabei mehrere lokale Maxima bzw. ein globales Maximum aufweisen. Die lokalen Maxima und auch das globale Maximum können jeweils eine Reflexion des Laserstrahls an einer der Grenzflächen anzeigen. Die Bezugsrelativverfahrposition kann dabei zum Beispiel einem Abstand zwischen dem Objektiv und dem Probenbereich entsprechen, bei dem der Laserstrahl auf eine bestimmte Grenzfläche innerhalb des Probenbereichs fokussiert wird, insbesondere eine Grenzfläche zwischen einem Substratträger, nachfolgend auch als Biochip bezeichnet (insbesondere Oberfläche des Biochip) und einem Eindeckmedium (bzw. Einbettungsmedium). Die Ermittlung der Bezugsrelativverfahrposition kann dann eine Einstellung einer Relativverfahrposition zum Aufnehmen des Bildes erleichtern. Zum Beispiel kann das Bild bei Einstellung der Bezugsrelativverfahrposition aufgenommen werden und es können weitere Bilder bei Positionen um die Bezugsrelativverfahrposition herum aufgenommen werden, zum Beispiel bei anderen Relativverfahrpositionen, die einen etwas (einige Mikrometer) größeren (und/oder kleineren) Abstand zwischen Objektiv und Probenbereich haben. Weiteres Wissen über die Beschaffenheit und Geometrie einer innerhalb des Probenbereichs befindlichen Probe können eine geeignete Einstellung einer Relativverfahrposition zum Aufnehmen des Bildes ausgehend von der Bezugsrelativverfahrposition erleichtern.

Zum Bestimmen der Bezugsrelativverfahrposition können eine Vielzahl von Teilbildern während des relativen Verfahrens des Objektivs und des Probenbereichs aufgenommen werden und kontinuierlich hinsichtlich des Maximums ausgewertet werden. Dabei können zum Beispiel einige tausend Teilbilder pro Sekunde aufgenommen werden. Die Belichtungszeiten können im Mikrosekundenbereich liegen. Eine Schrittweite in der Tiefenrichtung zwischen zwei Teilbildern kann zwischen 200 nm und 1000 nm, insbesondere bei ungefähr 500 nm, liegen. Die Schrittweite zwischen zwei Teilbildern sollte nicht größer als die Schärfentiefe des Mikroskops sein.

Damit kann eine zuverlässige Fokussierung zum Aufnehmen des Bildes gewährleistet werden und ein Hochdurchsatz kann aufgrund der raschen Fokusbestimmung gewährleistet sein.

Gemäß einer Ausführungsform der vorliegenden Erfindung ist das Verfahren derart ausgestaltet, dass die vorbestimmte Fläche eine Größe von zwischen 2 $\mu$m^2 und 1000 $\mu$m^2, insbesondere zwischen 5 $\mu$m^2 und 650 $\mu$m^2 hat, und durch ein oder mehrere Pixel gegeben ist. Je nach Größe der vorbestimmten Fläche kann ein Pixel oder können mehrere Pixel die vorbestimmte Fläche abdecken. Wenn die vorbestimmte Fläche durch ein Pixel abgedeckt ist, so kann während des Verfahrens das Maximum der Intensitätswerte von allen einzelnen Pixeln innerhalb des Teilbereichs herausgesucht werden. Wenn mehrere Pixel die vorbestimmte Fläche abdecken bzw. bilden, kann eine geeignete Aggregation, zum Beispiel Summierung oder Mittelwertbildung von Intensitäten der Pixel, die die vorbestimmte Fläche bilden, ermittelt werden und das Maximum kann von den aggregierten Intensitätswerten bestimmt werden. Eine Verkleinerung der Größe der vorbestimmten Fläche kann die Genauigkeit der Bezugsrelativverfahrposition erhöhen, wobei jedoch eine Empfindlichkeit herabgesetzt sein kann.

Gemäß einer Ausführungsform der vorliegenden Erfindung ist das Verfahren derart ausgestaltet, dass das für eine jeweilige Relativverfahrposition bestimmte Maximum das Maximum der Intensitätswerte aller Pixel innerhalb des Teilbereichs ist. Somit müssen lediglich alle Intensitätswerte der Pixel innerhalb des Teilbereichs ausgelesen werden und das Maximum aller Intensitätswerte herausgesucht werden. Hierbei ist es nicht erheblich, welches Pixel den Maximalwert der Intensitätswerte detektiert hat. Das Verfahren kann somit sehr schnell durchgeführt werden.

Gemäß einer Ausführungsform der vorliegenden Erfindung ist das Verfahren derart ausgestaltet, dass der Teilbereich eine Größe von zwischen 350 $\mu$m^2 und 6400 $\mu$m^2, insbesondere zwischen 750 $\mu$m^2 und 1300 $\mu$m^2, hat und insbesondere von 16 x 16 Pixeln gebildet ist, wobei die Detektionsfläche insbesondere eine Größe hat, die zwischen 10 und 100 mal so groß ist wie die Größe des Teilbereichs. Der Teilbereich kann so groß bemessen sein, dass der Laserstrahlreflex (insbesondere für alle Relativverfahpositionen) darauf abgebildet wird. Je kleiner der Teilbereich gewählt ist, umso schneller kann das Verfahren durchgeführt werden.

Gemäß einer Ausführungsform der vorliegenden Erfindung ist das Verfahren derart ausgebildet, dass in einem Detektionsstrahlengang zwischen dem Objektiv und der Detektionsfläche eine Tubuslinse angeordnet ist, die eine Brennebene des Objektivs auf die Detektionsfläche abbildet. Hinter dem (bzw. lichtstromabwärts des) Objektiv kann ein paralleler Strahlengang vorliegen und die parallelen Strahlen können von der Tubuslinse in eine bildseitige Brennebene abgebildet werden. Somit hat eine Verschiebung des Objektivs relativ zu der Tubuslinse keinen Einfluss auf die Abbildung der parallelen Strahlen in die bildseitige Brennebene der Tubuslinse.

An einen bestimmten Punkt innerhalb des Teilbereichs der Detektionsfläche gelangen somit nur Strahlen, die von einem bestimmten Punkt in der Brennebene des Objektivs in verschiedenen Richtungen ausgegangen sind. Durch geeignete Wahl der Größe der vorbestimmten Fläche kann somit Streulicht (welches nicht von einem Punkt in der objektseitigen Brennebene des Objektivs in verschiedenen Richtungen ausgegangen ist) von der Detektion zur Fokussierung ausgeschlossen werden.

Gemäß einer Ausführungsform der vorliegenden Erfindung ist das Verfahren derart ausgebildet, dass die vorbestimmte Fläche als eine virtuelle Lochblende derart gewählt ist, um im Wesentlichen nur von der objektseitigen Brennebene herrührendes auf den Teilbereich auftreffendes Laserlicht zur Bestimmung des Maximums zu berücksichtigen. Konventionell kann eine Lochblende vorgesehen gewesen sein, um Streulicht von der Detektion aufzuschließen. Eine derartige reale Lochblende ist in dem erfindungsgemäßen Verfahren nicht erforderlich: deren Wirkung wird nichtsdestotrotz durch die geeignete Wahl der vorbestimmten Fläche innerhalb des Teilbereichs der Detektionsfläche erreicht.

Gemäß einer Ausführungsform der vorliegenden Erfindung ist das Verfahren derart ausgebildet, dass mindestens eine Grenzfläche, Insbesondere zwei Grenzflächen, nicht an ein Gas, insbesondere Luft, angrenzt, wobei der Probenbereich insbesondere eine organische Probe umfasst, die auf einem Biochip aufliegt, in einer flüssigen Substanz eingebettet ist und von einem Deckglas abgedeckt ist, wobei ferner insbesondere die Oberseite des Deckglases eine erste Grenzfläche bildet, wobei die Unterseite des Deckglases eine zweite Grenzfläche bildet, und wobei die Oberfläche des Biochips eine dritte Grenzfläche bildet. Die organische Probe kann zum Beispiel eine histologische Probe umfassen, welche beispielsweise angefärbt ist und/oder mit einem oder mehreren Fluoreszenzmarker(n) oder Fluoreszenzmolekül(en) versetzt wurde. Die Fluoreszenzmarker oder Fluoreszenzmoleküle können an vorbestimmten Stellen oder Rezeptoren oder Antigenen an der organischen Probe gebunden sein. Die flüssige Substanz kann zum Beispiel Glycerin umfassen. Die organische Probe kann zum Beispiel eine nasse organische Probe sein, wobei verhindert sein kann, dass die Probe austrocknet. Ausführungsformen der Erfindung ermöglichen, eine in eine Flüssigkeit (dreidimensional, d.h. Im Wesentlichen von allen Seiten) eingebettete organische Probe abzubilden. Die Grenzflächen können durch eine Änderung des Brechungsindexes oberhalb und unterhalb der Grenzfläche charakterisiert sein. Zum Beispiel kann sich bei der Grenzfläche zwischen einem flüssigen Medium und einem festen Medium der Brechungsindex weniger stark ändern als bei einer Grenzfläche von Luft zu einem festen Medium, zum Beispiel Glas. Der Reflexionsgrad an der Grenzfläche kann umso geringer sein, je geringer die Änderung des Brechungsindex an der Grenzfläche ist. Trotz einer relativ geringen Reflexion an der dritten Grenzfläche kann diese durch das erfindungsgemäße Verfahren detektiert werden.

Gemäß einer Ausführungsform der vorliegenden Erfindung ist das Verfahren derart ausgebildet, dass ein Relativabstand zwischen dem Objektiv und dem Probenbereich ausgehend von einem größten Abstand zunächst verringert wird, während Intensitätswerte der Pixel des Teilbereichs ausgelesen werden, so dass insbesondere zunächst ein erstes lokales Maximum von der Reflexion des Laserstrahls von der ersten Grenzfläche herrührend, danach ein zweites lokales Maximum von der Reflexion des Laserstrahls von der zweiten Grenzfläche herrührend und schließlich ein drittes lokales Maximum von der Reflexion des Laserstrahls von der dritten Grenzfläche herrührend detektiert werden. Das erste lokale Maximum kann ein globales Maximum des Verlaufs der Maxima in Abhängigkeit der Relativverfahrposition sein. Werden alle drei (lokalen) Maxima in dem Verlauf der Maxima in Abhängigkeit der Relativverfahrposition detektiert, so kann die Zuverlässigkeit der Fokussierung verbessert werden. Innerhalb des Verlaufs der Maxima in Abhängigkeit der Relativverfahrposition kann ein (lokales) Maximum zum Beispiel dann bestimmt werden, wenn ein bestimmter Schwellwert der Intensität des Pixels überschritten ist. Der Schwellwert kann zum Beispiel aus dem zuvor detektieren (lokalen) Maximum abgeleitet werden. Das erste lokale Maximum kann größer als das zweite lokale Maximum sein und das zweite lokale Maximum kann wiederum größer als oder im Wesentlichen von gleicher Höhe sein wie das dritte lokale Maximum sein. Wird dieses Muster detektiert, so kann eine Zuverlässigkeit der Identifikation der Grenzflächen, und somit die Fokusbestimmung, erhöht werden.

Gemäß einer Ausführungsform der vorliegenden Erfindung ist das Verfahren derart ausgebildet, dass die Bezugsrelativverfahrposition derjenigen Relativverfahrposition entspricht, für die der an der dritten Grenzfläche, insbesondere der Oberfläche des Biochips, reflektierte Laserstrahl fokussiert auf den Teilbereich der Detektionsfläche abgebildet wird, wobei insbesondere die Relativverfahrposition zum Aufnehmen des Bildes aus vorbekanntem Wissen über die Probe ausgehend von der Bezugsrelativverfahrposition eingestellt wird. Zum Beispiel kann die Dicke der Probe (auf dem Biochip) zumindest näherungsweise vorbekannt sein. Ausgehend von der Bezugsrelativverfahrposition (in welcher die Oberfläche des Biochips in der Brennebene des Objektivs liegt) kann zum Beispiel der Abstand zwischen Objektiv und Probenbereich um einige Mikrometer (je nach der vorbekannten Dicke der Probe) vergrößert werden und/oder es können mehrere Bilder bei Verfahrpositionen aufgenommen werden, welche leicht von der Bezugsrelativverfahrposition abweichen.

Gemäß einer Ausführungsform der vorliegenden Erfindung ist das Verfahren derart ausgebildet, dass der Laserstrahl ein paralleles Strahlenbündel aufweist, mit einem Querschnittsdurchmesser, der im Wesentlichen gleich der Apertur des Objektivs ist. Damit kann die Empfindlichkeit des Verfahrens erhöht werden und eine Ausdehnung des abgebildeten Laserstrahls in der Tiefenrichtung kann im Wesentlichen einer Tiefenschärfe des Objekts gleichen.

Gemäß einer Ausführungsform der vorliegenden Erfindung ist das Verfahren derart ausgebildet, dass zwischen der Quelle des Laserstrahls und dem Objektiv zum Reflektieren des Laserstrahls durch das Objektivs hindurch ein dichroitischer oder nicht dichroitischer Strahlteiler angeordnet ist, der insbesondere einen Reflexionsgrad für den Laserstrahl von zwischen 5% und 20% aufweist. Damit kann der Laserstrahl in einfacher Weise in den Strahlengang des Objektivs eingekoppelt werden. Wenn der Reflexionsgrad für den Laserstrahl relativ gering ist, zum Beispiel im Wesentlichen 10%, kann somit auch nur ein geringer Tell des Lichts, welches zum Aufnehmen des Bildes vorgesehen ist, von der Detektion durch die Mikroskopkamera ausgeschlossen werden. In anderen Ausführungsformen kann der Strahlteiler auch aus dem Strahlengang entfernt werden, wenn das Bild des Probenbereichs aufgenommen wird.

Gemäß einer Ausführungsform der vorliegenden Erfindung ist das Verfahren derart ausgebildet, so dass der Strahlteiler eine Keilform aufweist, wobei sich Ebenen einer Vorderseite und Rückselte des Strahlteilers unter einem Keilwinkel schneiden, der insbesondere z.B. zwischen 0,1° und 1° liegt, wobei der Keilwinkel und die Größe des Teilbereichs insbesondere derart gewählt sind, dass nur ein Reflex des Laserstrahls, der nach Reflexion von entweder der Vorderseite oder der Rückseite des Strahlteilers und nach Reflexion von dem Probenbereich auf den Teilbereich abgebildet wird. Der Strahlteiler mit einer Keilform kann das Auftreten von Interferenzen, welche durch Reflexion an einer Vorderseite und einer Rückseite eines als Planplatte gebildeten Strahlteilers auftreten können, vermindern. Zur Fokussierung kann insbesondere das an der Vorderseite des keilförmigen Strahlteilers reflektierte Laserlicht verwendet werden. Das an der Rückseite des keilförmigen Strahlteilers reflektierte Laserlicht wird in der objektseitigen Brennebene des Objektivs an einem lateral verschiedenen Ort fokussiert. Durch geeignete Wahl der Größe und der Position des zweidimensionalen Teilbereichs der Detektionsfläche der Mikroskopkamera kann einer dieser an dem strahlförmigen Strahlteiler reflektierte Laserstrahl von der Detektion ausgeschlossen werden. Damit kann das Verfahren weiter verbessert werden.

Gemäß einer Ausführungsform der vorliegenden Erfindung ist das Verfahren derart ausgebildet, dass zwischen 1000 und 10000 mal in der Sekunde die Intensitätswerte der Pixel des Teilbereichs während des relativen Verfahrens des Objektivs und des Probenbereichs ausgelesen werden, und/oder ferner eine laterale Breite eines auf den Teilbereich der Detektionsfläche abgebildeten Reflexes des Laserstrahls bestimmt wird, um die Bezugsrelativverfahrposition zu bestimmen. Je geringer die laterale Breite des auf den Teilbereich der Detektionsfläche abgebildeten Reflexes des Laserstrahls bestimmt ist, umso näher liegt die jeweilige Relativverfahrposition bei derjenigen, bei welchem eine bestimmte Grenzfläche in der objektseitigen Brennebene des Objektivs liegt. Um die laterale Breite des auf den Teilbereich der Detektionsfläche abgebildeten Reflexes des Laserstrahls zu bestimmen, können mehrere Pixel um das Pixel mit der maximalen Intensität ausgelesen werden und zum Beispiel die Ausdehnung des Peaks um das Maximum bestimmt werden, bei welcher die Intensität des Maximums auf die Hälfte abgesunken ist.

Gemäß einer Ausführungsform der vorliegenden Erfindung ist das Verfahren derart ausgebildet, dass ein Transmissionsgitter zwischen Laser und Strahlteiler angeordnet und derart ausgebildet ist, dass wenigstens die nullte und die erste Beugungsordnung das Objektiv passieren und die Beugungsbilder des Laserstrahls von der Grenzfläche reflektiert und auf den Teilbereich der Detektionsfläche abgebildet werden, wobei der lateraler Abstand zwischen nullter und erster Beugungsordnung bestimmt wird, um eine Richtung einer Relativverschiebung zu bestimmen, In welcher eine Fokussierung des Reflexes von der Grenzfläche auf den Teilbereich erfolgt. Das Transmissionsgitter kann dabei eine Mehrzahl von gleich beabstandeten Gitterstegen aufweisen, welche sich mit Spalten abwechseln. Die periodische Struktur des Gitters kann geeignet modifiziert werden, z.B. durch Blazing eines Echelett-Gitters, um das Intensitatsverhältnis zwischen der nullten und den höheren Beugungsordnungen für die Detektion zu optimieren. Das Transmissionsgitter kann ein eindimensionales oder auch zweidimensionales Transmissionsgitter aufweisen. Bei Bestrahlen des Transmissionsgitters mit dem Lasersirahls erfolgt eine Beugung, so dass hinter dem Transmissionsgitter verschiedene Beugungsordnungen detektiert werden können, zum Beispiel eine minus erste Beugungsordnung, eine nullte Beugungsordnung und eine erste Beugungsordnung. Diese verschiedenen Beugungsordnungen können durch das Objektiv auch in die Brennebene des Objektivs fokussiert werden und können somit an der Grenzfläche reflektiert werden. Der laterale Abstand der auf den Teilbereich der Detektionsfläche abgebildeten Beugungsordnungen kann Aufschluss über die Richtung geben, in welcher der Relativabstand zwischen Objektiv und Probenbereich verändert werden muss, um eine bestimmte Grenzfläche in die Brennebene zu bringen.

Es sollte verstanden werden, dass Merkmale, welche individuell oder in irgendeiner Kombination im Zusammenhang mit dem Verfahren zum Aufnehmen eines Bildes eines Probenbereichs beschrieben, erläutert oder vorgesehen sind, ebenso gut, individuell oder in irgendeiner Kombination auf ein Mikroskopiesystem zum Aufnehmen eines Bildes eines Probenbereichs angewendet werden können, gemäß Ausführungsformen der vorliegenden Erfindung.

Gemäß einer Ausführungsform der vorliegenden Erfindung ist bereitgestellt ein Mikroskopiesystem zum Aufnehmen eines Bildes eines Probenbereichs, aufweisend: ein Objektiv, das entlang einer optischen Achse des Objektivs relativ zu dem Probenbereich verfahrbar ist; eine Lichtquelle, die ausgebildet ist, einen Lichtstrahl durch das Objektiv auf den Probenbereich zu richten, der insbesondere mindestens eine Grenzfläche enthält; eine Mikroskopkamera mit einer Detektionsfläche, die ausgebildet ist, von Pixeln eines zweidimensionalen Teilbereichs der Detektionsfläche detektierte Intensitätswerte des aus dem Probenbereich reflektierten und durch das Objektiv tretenden Lichtstrahls, auszulesen; einen Prozessor, der ausgebildet ist, für eine jeweilige Relativverfahrposition das Maximum von über eine vorbestimmte Fläche aggregierten Intensitätswerten der ausgelesenen Intensitätswerte innerhalb des Teilbereichs zu bestimmen; das Maximum mit der Relativverfahrposition zu assoziieren; mindestens eine Bezugsrelativverfahrposition aus mindestens einem lokalen Maximum eines Verlaufs der Maxima in Abhängigkeit der Relativverfahrposition zu bestimmen; eine Relativverfahrposition zum Aufnehmen eines Bildes basierend auf der Bezugsrelativverfahrposition zu bestimmen; und ein Antriebsmittel, um die Relativverfahrposition zum Aufnehmen eines Bildes einzustellen, wobei die Mikroskopkamera ferner ausgebildet ist, im Wesentlichen alle Pixel der Detektionsfläche der Mikroskopkamera zum Aufnehmen des Bildes des Probenbereichs auszulesen.

Ausführungsformen der vorliegenden Erfindung werden nun mit Bezug auf die beiliegenden Zeichnungen erläutert. Die Erfindung ist nicht auf die beschriebenen oder illustrierten Ausführungsformen beschränkt.

Fig. 1 zeigt in einer schematischen Seitenschnittansicht ein Mikroskopiesystem gemäß einer Ausführungsform der vorliegenden Erfindung;

Fig. 2 zeigt in einer schematischen Seitenschnittansicht einen Probenbereich mit einer Probe, von der unter Benutzung des in Fig. 1 illustrierten Mikroskopiesystems ein Bild aufgenommen werden kann;

Fig. 3 illustriert ein Beispiel eines von einer Mikroskopkamera aufgenommenen Bildes;

Fig. 4A, 4B und 4C illustrieren Beispiele eines Teilbereichs einer Detektionsfläche einer Mikroskopkamera mit bei verschiedenen Relativverfahrpositionen aufgenommenen Teilbildern und Fig. 4D zeigt ein Beispiel einer vorbestimmten Flache innerhalb des Teilbereichs;

Fig. 5 illustriert einen Verlauf von Maxima in Abhängigkeit einer Relativverfahrposition, wie er gemäß einer Ausführungsform eines Verfahrens bestimmt wird;

Fig. 6 zeigt ein weiteres Beispiel eines lokalen Maximums in einem Verlauf von Maximalwerten in Abhängigkeit von einer Relativverfahrposition, wie gemäß einer Ausführungsform eines Verfahrens betrachtet wird:

Fig. 7 illustriert eine schematische Seitenschnittansicht eines Mikroskopiesystems gemäß einer Ausführungsform der vorliegenden Erfindung im Bereich eines plattenförmigen Strahlteilers;

Fig. 8 illustriert in einer schematischen Seitenschnittansicht einen Teil eines Mikroskopiesystems gemäß einer Ausführungsform der vorliegenden Erfindung im Bereich eines keilförmigen Strahlteilers; und

Fig. 9 illustriert ein Beispiel eines Beugungsbildes des Laserstrahls, welches von einer Mikroskopkamera aufgenommen wurde, wenn ein Transmissionsgitter vorgesehen ist.

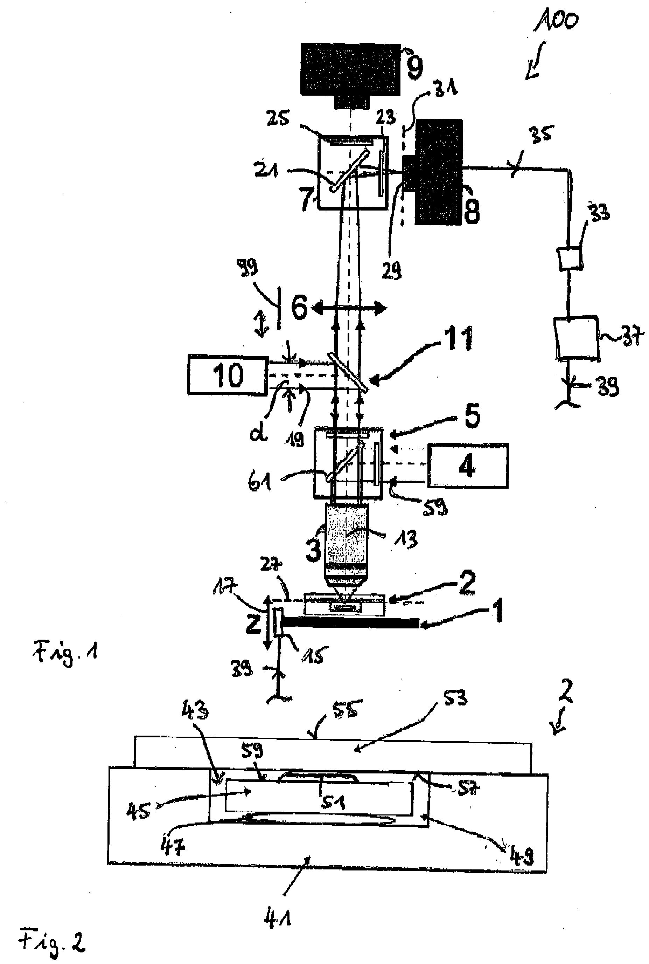

Das in einer schematischen Seitenschnittansicht illustrierte Mikroskopiesystem 100 in Fig. 1 umfasst ein Objektiv 3, das entlang einer optischen Achse 13 des Objektivs relativ zu einem Probenbereich 2 verfahrbar ist. Im allgemeine kann das Objektiv 3 und der Probenbereich 2 relativ zueinander entlang der optischen Achse 13 verfahrbar sein. Dazu ist ein Antriebsmittel 15 vorgesehen, welches ausgebildet ist, einen Mikroskoptisch 1 (oder das Objektiv 3) entlang der Pfeilrichtungen 17 (das heißt in Z-Richtung oder in vertikaler Richtung) zu verschieben, während das Objektiv 3 fest ist, oder das Objektiv zu verschieben, während der Tisch fest ist. Das Mikroskopiesystem 100 umfasst ferner einen Laser 10, der ausgebildet ist, einen Laserstrahl 19 durch das Objektiv 3 auf den Probenbereich 2 zu richten, der Insbesondere mindestens eine Grenzfläche enthält, wie mit Bezug auf Fig. 2 unten weiter erläutert wird. Um den Laserstrahl 19 durch das Objektiv 3 zu lenken, ist ein Strahlteiler 11 vorgesehen.

Das Mikroskopsystem 100 umfasst ferner eine Mikroskopkamera 8 mit einer Detektionsfläche 29, die ausgebildet ist, von Pixeln eines zweidimensionalen Teilbereichs der Detektionsfläche detektierte Intensitätswerte des aus dem Probenbereich 2 reflektierten und durch das Objektiv 3 tretenden Laserstrahls 19 auszulosen. In der illustrierten Ausführungsform 100 des Mikroskopiesystems ist zum Ablenken von rotem Licht, welches durch das Objektiv 3 sowie eine Tubuslinse 6 getretenen ist, ein Filtersatz 7 vorgesehen, um Licht mit einen Rotanteil auf die Mikroskopkamera 8 zu reflektieren. Dazu ist der Filtersatz 7 für eine Rot-Grün-Kanaltrennung vorgesehen. Insbesondere umfasst der Filtersatz 7 einen halbdurchlässigen Spiegel 21 sowie einen Rotfilter 23, welcher Wellenlängen außerhalb eines roten Wellenlängenbandes ausfiltert, so dass nur Wellenlängen eines gewünschten Rotbandes auf die Detektionsfläche 29 der Mikroskopkamera 8 auftrifft.

Der Filtersatz 7 umfasst ferner einen Grünfilter 25 in der optischen Achse 13, um nur ein gewünschtes Grünband auf eine zweite Mikroskopkamera 9 hindurchzulassen. Die zweite Mikroskopkamera 9 ist optional, in anderen Ausführungsformen braucht nur eine einzige Mikroskopkamera vorgesehen sein. Auch der Filtersatz 7 ist optional und kann in anderen Ausführungsformen fehlen. In diesen Ausführungsformen kann die Mikroskopkamera 8 anstelle der zweiten Mikroskopkamera 9 entlang der optischen Achse 13 angeordnet sein, Für bestimmte Fluoreszenzuntersuchungen kann es jedoch vorteilhaft sein, das Fluoreszenzlicht mehrerer Fluorophore separat durch zwei verschiedene Mikroskopkameras aufzunehmen.

Das Mikroskopiesystem umfasst ferner eine (in Fig. 1 schematisch dargestellte, insbesondere lichtsammelnde) Tubuslinse (oder Linsensystem) 6, die zwischen dem Objektiv 3 und der Mikroskopkamera 8 in einem Strahlengang angeordnet ist und die (zusammen mit dem Objektiv 3) eine Brennebene 27 des Objektivs 3 auf die Detektionsfläche 29 der Mikroskopkamera 8 abbildet. Zwischen dem Objektiv 3 und der Tubuslinse 6 ist dabei ein paralleler Strahlengang vorhanden und die Detektionsfläche 29 der Mikroskopkamera 8 liegt in einer Brennebene 31 der Tubuslinse 6.

Das Mikroskopiesystem 100 umfasst ferner einen Prozessor 33, der ausgebildet ist, für eine jeweilige Relativverfahrposition (Z-Position des Mikroskoptisches 1) das Maximum von über eine vorbestimmte Fläche aggregierten Intensitätswerten der ausgelesenen Intensitätswerte innerhalb des Teilbereichs zu bestimmen und mindestens eine Bezugsrelativverfahrposition aus mindestens einem lokalen Maximum eines Verlaufs der Maxima in Abhängigkeit der Relativverfahrposition zu bestimmen. Dazu ist der Prozessor 33, welcher beispielsweise in einem Computer umfasst sein kann, kommunikativ mit der Mikroskopkamera 8 verbunden, um Intensitätssignale 35 der Intensitäten der Pixel des Teilbereichs der Detektionsfläche 29 und auch Intensitätswerte über die gesamte Detektionsfläche 29 auszulesen. Das Mikroskopiesystem 100 umfasst ferner eine Steuerung 37, welche ebenfalls mit dem Prozessor 33 verbunden ist (oder den Prozessor umfasst) und welche ausgebildet ist, den Antrieb 15 durch Steuersignale 39 zur Verschiebung des Mikroskoptisches 1 (oder des Objektivs 3) anzusteuern. Ferner kann ein Messsystem vorgesehen sein, welches die Z-Position (das heißt Relativverfahrposition) unabhängig misst und an die Steuerung 37 kommuniziert.

Zum Aufnehmen eines Bildes des Probenbereichs 2 wird sodann eine Relativverfahrposition zum Aufnehmen des Bildes basierend auf der Bezugsretatfvverfahrposition bestimmt und eingestellt und schließlich das Bild mittels der Mikroskopkamera 8 aufgenommen.

Der Probenbereich 2 umfasst einen Objektträger mit eingebettetem Biochip, wie in größerem Detail in einer schematischen Seitenschnittansicht in Fig. 2 illustriert ist. Der Probenbereich 2 umfasst einen Objektträger 41, der eine plattenförmige Struktur mit einer Aussparung 43 hat. In der Aussparung 43 des Objektträgers 41 ist ein Biochip 45 angeordnet und mittels eines Klebers 47 an dem Objektträger 41 angebracht. Um den Biochip 45 herum ist Innerhalb der Aussparung 43 Glycerin 49 eingefüllt. Auf dem Biochip 45 ist eine (biologische) Probe 51 aufgebracht. Die Probe 51 ist somit in das Glycerin 49 eingebettet. Ein Deckglas 53 deckt die Aussparung 43 mit der darin befindlichen Probe 51 umgeben mit Glycerin 49 ab. Das Deckglas 53 hat eine obere Oberfläche 55, welche eine erste Grenzfläche bildet, und eine untere Oberfläche 57, welche eine zweite Grenzfläche bildet. Die Oberfläche 59 des Biochips 45 bildet eine dritte Grenzfläche. Insbesondere wird diese dritte Grenzfläche 59 in einem Verfahren zur Fokussierung gemäß einer Ausführungsform der vorliegenden Erfindung bestimmt.

Die Bezugsrelativverfahrposition (relativer vertikaler Abstand zwischen dem Objektiv 3 und dem Probenbereich 2) ist eingenommen, wenn der Laserstrahl 19 von dem Objektiv 3 auf die Oberfläche 59 (das heißt die dritte Grenzfläche) des Biochips 45 fokussiert ist. Sobald diese Bezugsrelativverfahrposition aufgefunden ist, kann ein oder können mehrere Bilder durch Auslesen der gesamten Detektionsfläche 29 der Mikroskopkamera 8 aufgenommen werden, wenn die Probe 51 zum Beispiel mit sichtbarem Licht beleuchtet wird oder mit geeignetem fluoreszenzanregendem Licht beleuchtet wird.

In der In Fig. 1 illustrierten Ausführungsform wird zur Veränderung der Relativverfahrposition (Abstand zwischen Objektiv 3 und Probenbereich 2) der Mikroskoptisch 1 vertikal verfahren, während das Objektiv 3 fest ist. In anderen Ausführungsformen kann der Mikroskoptlsch 1 fest sein, während das Objektiv 3 vertikal verfahren werden kann.

Zur Anregung von Fluoreszenz in der Probe 51 (welche zum Beispiel mit Fluorophoren versetzt sein kann) wird eine Lichtquelle 4 (z.B. LED) verwendet, welche Anregungslicht 59 eines geeigneten, z.B. blauen, Emissionsspektrums erzeugt. Über einen Fluoreszenzfiltersatz 5 erfolgt die spektrale Trennung von Anregungslicht und Fluoreszenzlicht. Mithilfe des Objektivs 3 und der Tubuslinse 6 wird das in der Objektebene 27 emittierte Fluoreszenzlicht vergrößert auf die beiden Mikroskopkameras 8, 9 abgebildet. Die Lichtstrahlen des Fluoreszenzlichts verlaufen zwischen dem Objektiv 3 und der Tubuslinse 6 parallel; der Raum zwischen Objektiv 3 und Tubuslinse 6 wird daher auch als "Unendilch-Raum" bezeichnet. Der Fluoreszenzfiltersatz 5 kann dazu einen dichroitischen Spiegel 61 umfassen, welcher das Fluoreszenzanregungslicht 59 reflektiert, während das Fluoreszenzlicht im Wesentlichen unreflektiert hindurchtreten kann.

Zur schnellen Fokussierung vor einer Bildaufnahme wird die Probe vor der mikroskopischen Aufnahme mithilfe des Laser- und Kamera-basierten Systems optisch vermessen. Dabei wird zur Bestimmung der Schärfenposition der Oberfläche des Biochips das Licht des Lasers 10 mit zum Beispiel sichtbarem rotem Emissionsspektrum verwendet und mithilfe der Strahlteilerplatte 11 auf die optische Achse 13 des Objektivs 3 eingekoppelt. Dabei kann die Einkopplung im Unendlich-Raum (das heißt in dem Abschnitt, in dem die Strahlen parallel zueinander verlaufen) des Mikroskops erfolgen, Der Laserstrahl 19 ist dabei durch eine nicht illustrierte Optik zu einem parallelen Strahlenbündel 19 geformt.

Der Laserstrahl 19 durchläuft den Fluoreszenzfiltersatz 5 und wird von dem Objektiv 3 in die Objektebene 27 des Mikroskopiesystems 100 fokussiert. Befindet sich eine optische Grenzfläche in der Fokusebene 27 des Objektivs 3, so entsteht eine punktförmige Reflexion des Laserstrahls 19, die durch das Objektiv 3 und die Tubuslinse 6 auf die Mikroskopkamera 8, insbesondere auf die Detektionsfläche 29 der Mikroskopkamera 8, abgebildet wird. Die Reflexion des Laserstrahls 19 erscheint dabei als ein punktförmiges Signal im Bild der Kamera, dessen Intensität vom Grenzflächenübergang an den Materialien des Objektträgers abhängig ist.

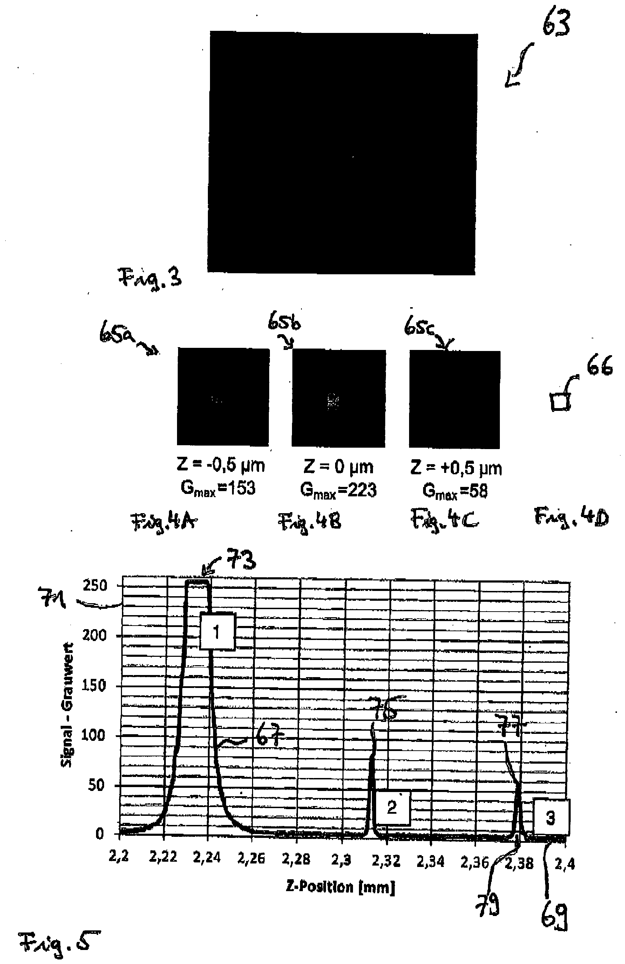

Fig. 3 zeigt ein Gesamtbild einer punktförmigen Laserreflexion, wie es von der gesamten Detektionsfläche 29 der Mikroskopkamera 8 aufgenommen wurde. Das gesamte Bild 63, wie es von der Mikroskopkamera 8 registriert wurde, umfasst zum Beispiel 1024 x 1024 Pixel.

In dem Verfahren zur Bestimmung der Bezugsrelativverfahrposition (das heißt der Position, in der die Oberfläche 59 des Biochips 45 in der Brennebene 27 des Objektivs 3 angeordnet ist) wird nur ein Teilbereich 65 der Pixel der gesamten Detektionsfläche 29 der Mikroskopkamera 8 ausgelesen, während der Abstand zwischen dem Objektiv 3 und dem Probenbereich 2 verändert wird. Fig. 4A, 4B und 4C illustrieren dazu beispielhaft Teilbereiche 65a, 65b, 65c der Detektionsfläche 29 und die von den darin enthaltenen Pixeln detektierten Intensitäten als Grauwerte des Bildes des Laserreflexes. Die Teilbereiche 65a, 65b, 66c können zum Beispiel von 16 x 16 Pixeln gebildet sein. Die Fig. 4A, 4B und 4C illustrieren dabei Teilbilder, welche bei z = -0,5 $\mu$m, z = 0 $\mu$m und z = +0,5 $\mu$m relativ zu dem Relativabstand zwischen Objektiv 3 und Probenbereich 2 entstehen, wobei die Oberfläche 59 des Biochips 45 In der Brennebene 27 des Objektivs angeordnet ist, so dass die Bezugsrelatlvverfahrposition für z = 0 $\mu$m eingenommen wird. Wird die Fokusebene des Objektivs von der entsprechenden Grenzfläche im Objektträger wegbewegt (siehe Fig. 4A, 4C), so wird das Lasersignal abgeschwächt bzw. deutlich verbreitert abgebildet. Aus Fig. 4A, 4B und 4C wird deutlich, dass bereits bei Verschiebungen um ca. +/- 500 nm die Aussteuerung der einzelnen Pixel deutlich abnimmt, das heißt, das Maximum der Intensität über den Teilbereich Ist am größten, wenn genau die Bezugsrelativverfahrposition eingenommen ist, das heißt in dem Fall der Fig. 4B.

Um die Fokusposition der Biochipoberfläche (das heißt den Relativabstand zwischen Objektiv 3 und Probenbereich 2, in dem die Oberfläche 59 des Biochips 45 in der Brennebene 27 des Objektivs 3 ist) zu bestimmen, wird der Objektträger 1 in Z-Richtung 17 durch die Fokusebene 27 des Mikroskopiesystems 100 bewegt. Dies kann mithilfe einer in Z-Richtung motorisierten Objektivaufnahme oder durch Bewegung des Objektträgers 1 erreicht werden. Für die Fokusbestimmung wird der Intensitätsverlauf der Laserreflexion mit hoher Bilderfassungsrate von der Mikroskopkamera 8 in Abhängigkeit der Distanz zwischen dem Objektiv 3 und dem Objektträger 1 (bzw dem Probenbereich 2) aufgezeichnet. Um möglichst hohe Bildraten erreichen zu können, wird nur ein geringer Bereich (zum Beispiel Teilbereich 65 illustriert in Fig. 4A. 4B, 4C) ausgelesen und an den Prozessor 33 bzw. einen PC übermittelt. Zum Beispiel kann der Teilbereich 16 x 16 Pixel umfassen, wodurch Bilderfassungsraten von mehreren tausend Bildern, z.B. etwa 3000 Bildern, pro Sekunde erreichbar sind.

Fig. 4D illustriert beispielhaft eine vorbestimmte Fläche 66, über die Intensitätswerte eines oder mehrerer Pixel aggregiert werden, um das Maximum über den Teilbereich (z.B. 65a, 65b, 65c) zu ermitteln. Die vorbestimmte Fläche 66 kann genau der Fläche eines einzelnen Pixels entsprechen, oder es können mehrere Pixel herangezogen werden, um die vorbestimmte Fläche 66 abzudecken.

Für jedes für einen bestimmten Relativabstand (Relatlvverfahrposition) aufgezeichnetes Teilbild kann der höchste Pixel-Grauwert ermittelt werden und mit einer hohen Datenrate an die Steuerung 37 übermittelt werden. Mit der Steuerung 37 kann die Verknüpfung der Kameradaten mit der zugehörigen Relativverfahrposition sowie die Bestimmung der Biochip-Position aus den Kameradaten erfolgen.

Fig. 5 illustriert ein Beispiel eines Verlaufs der (für jede Relativverfahrposition) bestimmten Maxima in Abhängigkeit der Relatiwerfahrposition als eine Kurve 67 in einem Koordinatensystem, wobei auf einer Abszisse 69 die Relativverfahrposition (Z-Position) und wobei auf der Ordinate 71 das Maximum der Intensitäten in dem Teilbereich bei der zugehörigen Relatiwerfahrposition aufgetragen ist. Die Kurve 67 zeigt ein charakteristisches Signalmuster ("Autofokussignal"), welchem die Geometrie des Probenbereichs, wie er in Fig. 2 illustriert ist, zugrunde liegt. Da der Aufbau des Probenbereichs 2 bekannt ist, kann aus dem Signalverlauf 67 die Z-Position des Biochips 45, insbesondere die Oberfläche 59 des Biochips 45, bestimmt werden.

Die Kurve 67 (Autofokussignal) weist ein erstes Maximum 73 auf, welches von der Reflexion des Laserstrahls 19 an der ersten Grenzfläche 55 (obere Oberfläche des Deckglases 53) herrührt. Ferner weist die Kurve 67 ein zweites Maximum 75 auf, welches von der Reflexion des Laserstrahls 19 von der unteren Oberfläche 57 (zweite Grenzfläche) des Deckglases 53 herrührt. Schließlich weist die Kurve 67 ein drittes Maximum 77 auf, welches von der Reflexion des Laserstrahls 19 von der Oberfläche 59 des Biochips 45 (dritte Grenzfläche) herrührt. Die Fokusposition der Biochip-Oberfläche 59 ergibt sich dabei aus der Bestimmung der Z-Position 79 des dritten Signalmaximums 77. Mit Hilfe des Mikrocontrollers bzw. der Steuerung 37 und eines Antriebsmittels zum Verfahren des Objektivs 3 wird das Objektiv 3 anschließend an den ermittelten Fokusort zurückgefahren. Dabei wird die Länge der Fahrt über das Autofokussignal gesteuert, das simultan zur Bewegung in Z überwacht und ausgewertet wird.

Die Fokusposition gilt gemäß einer Ausführungsform als erreicht - und die Fahrtbewegung wird gestoppt, wenn die folgenden Bedingungen erfüllt sind:

- Ein zuvor definierter Schwellwert des Autofokussignals wurde überschritten. Dieser Schwellwert wird aus der Signalhöhe des zuvor ermittelten Autofokussignals ermittelt,
- Das Autofokussignal erreicht ein lokales Maximum.

Wie aus Fig. 5 hervorgeht, weisen die Maxima Signalhöhen eines bestimmten Musters auf Das dritte Maximum 77 kann zum Beispiel als zuverlässig detektiert erkannt werden, falls die Signalhöhe des lokalen Maximums 77 größer ist als 50% der Signalhöhe des davor liegenden zweiten lokalen Maximums 75 und wenn ferner tatsächlich ein lokales Maximum vorliegt, das heißt, Intensitätswerte rechts und links der Bezugsrelativverfahrposition 79 sind geringer als die Intensität genau bei der Bezugsrelativverfahrposition 79. Somit kann auf zuverlässige Weise die Bezugsrelativverfahrposition ermittelt werden, in der der Laserstrahl 19 auf die Oberfläche 59 des Biochips 45 fokussiert wird.

Die Oberfläche des Biochips muss jedoch nicht die optimale Bildgebungsebene für die Fluoreszenzmikroskopie repräsentieren, da die Schichtdicke der Probe 51 zum Teil größer sein kann als die Schärfentiefe des Mikroskopiesystems 100. Daher können um die ermittelte Fokusposition herum mehrere Fluoreszenzaufnahmen erstellt werden. Alternativ wird die Relativverfahrposition ausgehend von der Bezugsrelativverfahrposition um eine bestimmte Strecke verschoben, bevor ein Fluoreszenzbild oder ein lichtmikroskopisches Bild aufgenommen wird.

Um die Maxima 73, 75 und 77 zuverlässig voneinander trennen zu können, ist gemäß einer Ausführungsform der vorliegenden Erfindung die Auflösung des Autofokus-Systems etwa gleich der Schärfentiefe des Mikroskopiesystems. Der Durchmesser d des parallelen Laserstrahls 19 (siehe Fig. 1) ist vorzugsweise so dimensioniert, dass die volle Apertur des Mikroskopobjektivs 3 ausgeleuchtet wird. Zum Beispiel kann ein Laser verwendet werden, welcher eine rote Emissionswellenlänge (zum Beispiel $\lambda_0 = 635$ nm) hat, dafür ergibt sich bei einer numerischen Apertur von 0,5 eine Tiefenschärfe von ca. $t_w = 2{,}54\ \mu m$.

Um zu verhindern, dass Licht, welches von außerhalb der Fokusebene 27 zurückgeworfen wird, die Messungen überlagert und so die axiale Auflösung des Verfahrens verringert, werden die physikalischen Eigenschaften von Laser und Detektor vorteilhaft genutzt, ohne eine üblicherweise verwendete Lochblende zu erfordern. Die aktive Emissionsfläche des Lasers 10 kann vorteilhafterweise wenige $\mu m$ betragen, so dass eine Punktlichtquelle vorliegt. Dadurch kann auf eine Lichtquelle-Lochblende verzichtet werden.

Auch kann auf eine Detektor-Lochblende verzichtet werden, da, gemäß einer Ausführungsform der Erfindung, an jedem Z-Messpunkt (an jeder Relativverfahrposition) die Signalstärke jeweils alleinig durch das Pixel mit dem größten Grauwert in dem Teilbereich der Detektionsfläche 29 definiert wird. Auf diese Weise kann eine Lochblende von wenigen Quadratmikrometern simuliert werden, deren Fläche der Pixelfläche entspricht. Je nach Größe der Pixel kann die vorbestimmte Fläche durch ein oder mehrere Pixel gegeben sein. Durch die dabei ausgewertete größere Kamerabildregion von 16 x 16 Pixeln kann das Verfahren gleichzeitig robust gegenüber Abweichungen der Laserposttion vom Bildregionszentrum sein. Bei kurzen Belichtungszeiten kann der Einfluss von unscharf abgebildeten Reflexionen von außerhalb der Fokusebene so stark vermindert werden, dass das gewonnene Signal fast ausschließlich durch Laserreflexion aus der Fokusebene 27 definiert wird. Als Pixelgröße kann zum Beispiel 3,45 $\mu m$ x 3,46 $\mu m$ verwendet werden und die Belichtungszeiten können zum Beispiel zwischen 20 $\mu s$ und 1000 $\mu s$ liegen.

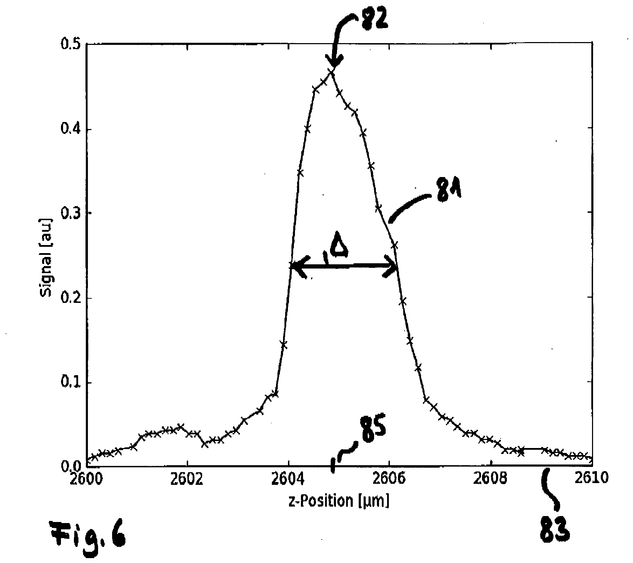

Fig. 6 illustriert ein Autofokussierungssignal, welches von der Reflexion des Laserstrahls 19 von der Oberfläche 59 des Biochips 45 herrührt, das heißt ein drittes Maximum In einem Verlauf gemäß der Kurve 67 In Fig. 5. Der Verlauf 81 der Maxima der Intensität in dem Teilbereich in Abhängigkeit der Z-Position auf der Abszisse 83 wurde bestimmt unter Verwendung eines Objektivs mit 20-facher Vergrößerung mit einer numerischen Apertur von 0,5, wobei ein Laser mit einer Emissionswellenlänge von $\lambda_0 = 635$ nm eingesetzt wurde. Die axiale Auflösung dieses Signals 81 kann zum Beispiel aus der Halbwertsbreite $\Delta$ zu ca. 2,1 $\mu m$ bestimmt werden. Die Bezugsrelativverfahrposition 85 kann zum Beispiel als die Z-Position bestimmt werden, bei dem das Maximum 82 auftritt oder als ein Schwerpunkt der Kurve 81 bzw. Schwerpunkt des Maximums 82.

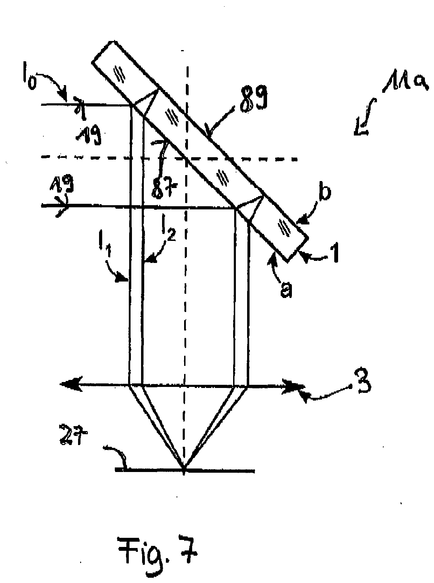

Fig. 7 illustriert in einer schematischen Seitenschnittansicht einen Strahlteiler 11a gemäß einer Ausführungsform der vorliegenden Erfindung, welcher zum Beispiel in dem in Fig. 1 illustrierten Mikroskopiesystem 100 zum Einsatz kommen kann. Bei dem Strahlteiler 11a handelt es sich um einen Parallelplattenstrahlteiler mit einer vorderen Oberfläche 87 und einer hinteren Oberfläche 89, an denen jeweils der Laserstrahl 19 reflektiert werden kann, um zu zwei verschiedenen reflektierten Teilstrahlen $I_1$ und $I_2$ zu führen. Die zwei Teilstrahlen $I_1$ und $I_2$ werden durch das Objektiv 3 in der Brennebene 27 überlagert, wodurch sich Leistungsschwankungen ergeben können. Zur Verminderung dieser Leistungsschwankungen kann eine niedrig kohärente Lichtquelle verwendet werden, wodurch die Interferenzen vermindert werden können.

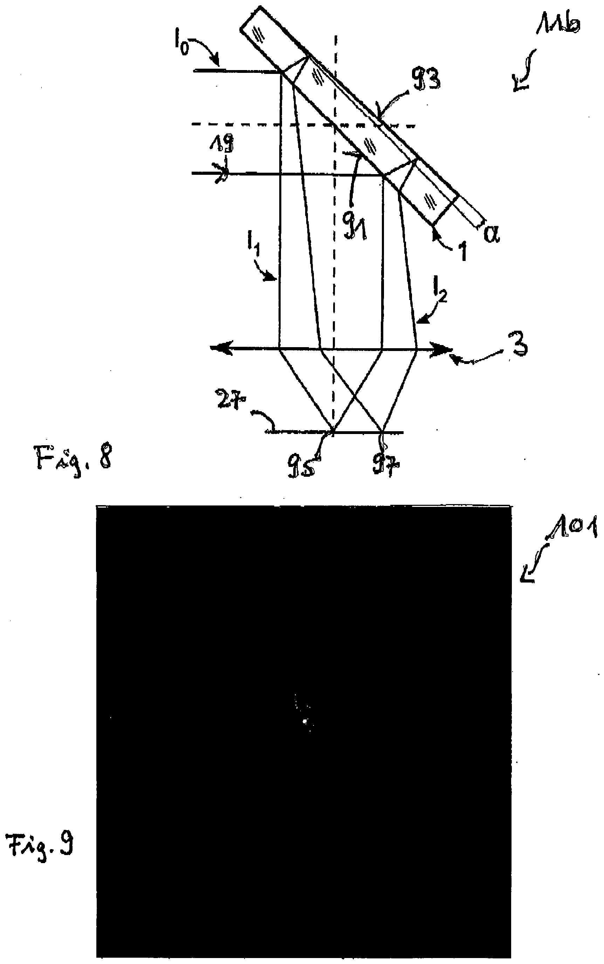

Alternativ kann zur Verminderung dieser Leistungsschwankungen eine Strahlteilerplatte 11b mit einem leichten Keilwinkel ("Keilplatte") eingesetzt werden, wie sie schematisch in einer Schnittansicht in Fig. 8 illustriert ist. Die Keilplatte 11 b hat eine vordere Oberfläche 91 und eine hintere Oberfläche 93, die nicht parallel zueinander sind, sondern um einen Winkel $\alpha$ ferner gegeneinander verkippt sind. Durch den Einsatz dieser Keilplatte als Strahlteiler 11 (zum Beispiel in dem in Fig. 1 illustrierten Mikroskopiesystem 100) werden die Laserreflexionen des Laserlichts 19 an der vorderen Seite 91 und der hinteren Seite 93 in unterschiedlichen Richtungen abgelenkt, um zu Teilstrahlen $I_1$ und $I_2$ zu resultieren, welche demzufolge unter verschiedenen Winkeln in das Objektiv 3 eintreten und folglich auf zwei verschiedene Orte 95 bzw. 97 in der Brennebene 27 des Objektivs fokussiert werden. Die Orte 95 und 97 sind somit lateral versetzt in der Objektebene 27. Eine Überlagerung der beiden Teilstrahlen $I_1$, $I_2$ am Beobachtungsort findet nun nicht mehr statt und somit erfolgt auch keine störende Interferenz.

In der Eintrittspupille des Objektivs können sich die beiden Teilstrahlen $I_1$ und $I_2$ weiterhin überlagern, Allerdings bildet sich am Überlagerungsort eine Interferenzmodulation aus, dessen räumliche Frequenz vom Keilwinkel des Strahlteilers abhängig ist. Um Leistungsverluste durch eine ungünstige Lage der Minima und Maxima des Modulationsmusters in der Eintrittspupille zu vermeiden, sollte der Keilwinkel mindestens so groß gewählt werden, dass das Interferenzmuster über die volle Apertur des Objektivs mindestens 10 Maxima bzw. Minima ausweist.

Der Strahlteiler 11b mit einem Keilwinkel kann auch einen Einfluss auf die Bildgebung des Mikroskopiesystems 100 haben. So können sich zum Beispiel laterale, wellenlängenabhängige Verschiebungen des Mikroskopbildes sowie Verzerrungen in eindimensionaler Richtung ergeben. Daher ist der maximale Keilwinkel des Strahlteilers von der jeweiligen Mikroskopieanwendung abhängig. Zum Beispiel kann als Keilwinkel $\alpha = 0,5°$ beispielhaft gewählt werden,

Prinzipiell können etwaig auftretende Abbildungsfehler durch geeignete zusätzliche optische Elemente oder Verfahren in der Bildauswertung korrigiert werden Zum Beispiel kann eine zweite keilförmige Strahlteilerplatte vorgesehen sein, die identisch zur ersten Strahlteilerplatte ist und im Unendlich-Raum des Mikroskops so angeordnet ist, dass sich die Winkeländerungen durch die Keilform der beiden Strahlteiler gegenseitig aufheben.

Die Verfahren und Systeme gemäß der vorliegenden Erfindung können verschiedene Vorteile ergeben:

Durch die doppelte Nutzung der Mikroskopkamera ist kein zusätzlicher Detektor zur Auswertung der Autofokussignale notwendig. Dadurch ergibt sich eine Einsparung von Komponentenkosten und Justageaufwand. Die Anzahl der zusätzlich benötigten Komponenten kann sich so auf ein strahlaufgeweitetes, kollimiertes Lasermodul und einen Strahlteiler beschränken.

Durch die Auswertung eines einzelnen Pixels in den Kameradaten kann sich eine hohe Auflösung in Z-Richtung ergeben, vergleichbar mit einer Fotodetektor-Lochblenden-Kombination (Konfokaltechnik). Gleichzeitig kann der bei Lochblendenanwendungen übliche hohe Justageaufwand entfallen, da für jede Messtiefe eine Detektorregion mit einer Vielzahl von Pixeln (typischerweise 16 x 16) erfasst wird. Dabei ist es unerheblich, welches Pixel innerhalb der Region, das heißt des Teilbereichs, den maximalen Grauwert detektiert oder ausweist.

Da auch die Auswahl der Detektorregion dynamisch erfolgen kann (zum Beispiel während der Initialisierungsphase des Mikroskops), kann sich das Lasersignal nahezu beliebig auf der Detektorfläche der Kamera befinden. Daher ist das Verfahren im Vergleich zu lochblendenbasierten Autofokusanwendungen sehr robust.

Als Lichtquelle kann ein Lasermoduf verwendet werden, dessen Emissionswellenlänge im Nah-Infrarot (NIR) liegt, zum Beispiel bei etwa 830 nm. In diesem Fall kann ein dichroitischer Strahlteiler 11 zur Einkopplung des Laserlichts in den Strahlengang des Objektivs verwendet werden. Eine keilförmige Strahlteilerplatte wäre in diesem Fall nicht benötigt.

Zur Vermeidung von interferenabedingten Signalschwankungen kann prinzipiell auch eine kurzkohärente Lichtquelle, zum Beispiel eine Superlumineszenzdiode bzw. eine LaserLichtquelle mit reduzierter Kohärenzlänge, genutzt werden. In diesem Fall könnte die keilförmige Strahfteilerplatte durch einen einfachen Strahlteiler (Parallelplatte) ersetzt werden. Die Emissionswellenlänge kann dabei im Sichtbaren oder auch im Nah-Infraroten liegen.

Die mikrocontrollergesteuerte Bewegung in Z-Richtung (Veränderung der Relativverfahrposition) kann entweder mit einer motorisierten Objektivaufnahme oder mit einem motorisierten Mikroskoptisch umgesetzt werden.

Statt der Auswertung des hellsten Pixels der Detektorregion kann die Signalbreite des jeweiligen Laser-Reflexionsblldes ausgewertet werden.

Zusätzlich zur Auswertung des hellsten Pixels der Detektorregion kann die Signalbreite des jeweiligen Laser-Reflexionsbildes ausgewertet werden.

Gemäß einer Ausführungsform der vorliegenden Erfindung kann ein Transmissionsgitter zwischen dem Laser 10 und dem Strahlteiler 11 angeordnet werden, um so ein Autofokusverfahren mit richtungsaufgelöster Fokusbestimmung zu ermöglichen. Das Transmissionsgitter 99 ist optional und könnte bei Bedarf in den Strahlengang des Lasers eingeschoben werden. Ist das Transmissionsgitter 99 in dem Strahlengang zwischen dem Laser 10 und dem Strahlteiler 11 angeordnet, so bilden sich die Beugungsordnungen 1,0 und -1 aus. Diese werden bei der Abbildung durch das Objektiv 3 in die Objektebene 27 fokussiert. Im Kamerabild einer fokussierten Grenzfläche ergeben sich dann drei punktförmige Maxima, deren Abstand zueinander von der Gitterkonstante des Transmissionsgitters abhängig ist. Bei einer Verschiebung der Z-Position vom optimalen Fokuspunkt variiert der Abstand zwischen den Signalen der ersten bzw. minus ersten Beugungsordnung im Kamerabild. Bei einer leichten Fokusverschiebung lässt sich daher, durch die Auswertung lateraler Abstände der beiden Signale, die Verschiebungsrichtung ermitteln, die zu dem optionalen Fokuspunkt führt.

Fig. 9 zeigt beispielhaft eine Bildaufnahme 101 der Mikroakopkamera 8 (siehe Fig. 1), während sich in der Fokusebene des Objektivs eine Grenzfläche befindet. Das Signal der nullten Beugungsordnung befindet sich dabei im Bildzentrum des Bildes 101 der Fig. 9. Die Maxima der ersten und der minus ersten Beugungsordnung befinden sich jeweils mittig am linken (aus Reproduktionsgründen kaum sichtbar) und rechten Bildrand.

Gemäß Ausführungsformen der vorliegenden Erfindung wird keine starre Lochblende verwendet (vor der Detektionsfläche), sondern die Helligkeit der einzelnen Pixel einer Detektorregion der Kamera ausgewertet. Die Abmessungen der für die Auswertung herangezogenen vorbestimmten Fläche 66 (siehe Fig. 4D) können in der Größenordnung der herkömmlich verwendeten physikalischen Lochblendenapertur liegen.

Ausführungsformen der vorliegenden Erfindung ermöglichen eine zuverlässige Fokussierung auf optische Grenzflachen, die sich innerhalb eines dreidimensionalen Probenbereichs befinden, und insbesondere Grenzflächen aufweisen, welche nicht an Luft grenzen. Laserreflexionen an Grenzflächen, die innerhalb des Probenbereichs liegen, sind prinzipiell schwächer als Laserreflexionen an der Oberfläche zu Luft. Zum Beispiel kann der Reflexionsgrad der Grenzfläche Glycerin-Biochip (das heißt der dritten Grenzfläche) bei nur 0.029% liegen. Der Reflexionsgrad der Grenzfläche Luft zu Deckglas-Oberseite kann dagegen bei ca. 4,3% liegen. Die zur Fokussierung relevante Grenzfläche liefert daher ein Signal, das um einen Faktor von ca. 150 geringer ist als das Signal der Probenoberfläche zu Luft. Aufgrund der Erkennung des charakteristischen Reflexionsmusters in Abhängigkeit der Relativverfahrposition kann dennoch eine zuverlässige Fokussierung auf die Biochip-Oberfläche erreicht werden,

**Patentansprüche**

1. Verfahren zum Aufnehmen eines Bildes eines Probenbereichs (2), aufweisend:

    Relatives Verfahren eines Objektivs (3) und des Probenbereichs (2) entlang einer optischen Achse (13) des Objektivs (3);
    Richten eines Lichtstrahls (19) durch das Objektiv (3) auf den Probenbereich (2), der mindestens eine Grenzfläche (59), insbesondere drei Grenzflächen (55, 57, 59), enthält;
    Auslesen von Intensitätswerten des an der Grenzfläche reflektierten und durch das Objektiv tretenden Lichtstrahls, die von Pixeln eines zweidimensionalen Teilbereichs (65) einer Detektionsfläche (29) einer Mikroskopkamera (8) detektiert wurden;
    Bestimmen, für eine Relativverfahrposition (Z), des Maximums (73, 75, 77) von über eine vorbestimmte Fläche (66) aggregierten, insbesondere summierten, Intensitätswerten der ausgelesenen Intensitätswerte innerhalb des Teilbereichs (65);
    Assoziieren des Maximums mit der Relativverfahrposition (Z);
    Bestimmen mindestens einer Bezugsrelativverfahrposition aus mindestens einem lokalen Maximum eines Verlaufs (67) der Maxima (73, 75, 77) in Abhängigkeit der Relativverfahrposition (Z);
    Einstellen der Relativverfahrposition zum Aufnehmen eines Bildes basierend auf der Bezugsrelativverfahrposition; und
    Auslesen im Wesentlichen aller Pixel der Detektionsfläche (29) der Mikroskopkamera zum Aufnehmen des Bildes, insbesondere Fluoreszenzbildes, des Probenbereichs.

2. Verfahren gemäß Anspruch 1, wobei die vorbestimmte Fläche (66) eine Größe von zwischen 2 $\mu m^2$ und 1000 $\mu m^2$, insbesondere zwischen 5 $\mu m^2$ und 650 $\mu m^2$ hat, und durch ein oder mehrere Pixel gegeben ist.

3. Verfahren gemäß einem der vorangehenden Ansprüche, wobei das für eine jeweilige Relativverfahrposition bestimmte Maximum das Maximum der Intensitätswerte aller Pixel innerhalb des Teilbereichs ist.

4. Verfahren gemäß einem der vorangehenden Ansprüche, wobei der Teilbereich (65) eine Größe von zwischen 350 $\mu m^2$ und 6400 $\mu m^2$, insbesondere zwischen 750 $\mu m^2$ und 1300 $\mu m^2$ hat und ferner insbesondere von 16 x 16 Pixeln gebildet ist,

5. Verfahren gemäß einem der vorangehenden Ansprüche, wobei in einem Detektionsstrahlengang zwischen dem Objektiv (3) und der Detektionsfläche (29) eine Linse (6) angeordnet ist, die eine Brennebene (27) des Objektivs (3) auf die Detektionsfläche (29) abbildet.

6.  Verfahren gemäß einem der vorangehenden Ansprüche, wobei die vorbestimmte Fläche (66) als eine virtuelle Lochblende derart gewählt ist, um im Wesentlichen nur von der objektseitigen Brennebene (27) herrührendes auf den Teilbereich (65) auftreffendes Licht zur Bestimmung des Maximums zu berücksichtigen.

7.  Verfahren gemäß einem der vorangehenden Ansprüche, wobei mindestens eine Grenzfläche (57, 59), insbesondere zwei Grenzflächen, nicht an ein Gas, insbesondere Luft, angrenzt,
    wobei der Probenbereich (2) insbesondere eine organische Probe (51) umfasst, die auf einem Substratträger (45) aufliegt, in einer flüssigen Substanz (49) eingebettet ist und von einem Deckglas (63) abgedeckt ist,
    wobei ferner Insbesondere die Oberseite (55) des Deckglases eine erste Grenzfläche bildet, wobei die Unterseite (57) des Deckglases eine zweite Grenzfläche bildet, und wobei die Oberfläche (59) des Substratträgers (45) eine dritte Grenzfläche bildet.

8.  Verfahren gemäß einem der vorangehenden Ansprüche, wobei ein Relativabstand zwischen dem Objektiv (3) und dem Probenbereich (2) ausgehend von einem größten Abstand zunächst verringert wird, während Intensitätswerte der Pixel des Teilbereichs ausgelesen werden,
    sodass insbesondere zunächst ein erstes lokales, insbesondere globales, Maximum (73) von der Reflektion des Lichtstrahls (19) von der ersten Grenzfläche (55) herrührend, danach ein zweites lokales Maximum (75) von der Reflektion des Lichtstrahls (19) von der zweiten Grenzfläche (57) herrührend und schließlich ein drittes lokales Maximum (77) von der Reflektion des Lichtstrahls (19) von der dritten Grenzfläche (59) herrührend detektiert werden,

9.  Verfahren gemäß einem der vorangehenden Ansprüche, wobei die Bezugsrelativverfahrposition derjenigen Relativverfahrposition entspricht, für die der an der dritten Grenzfläche, Insbesondere der Oberfläche (59) des Substratträgers (45), reflektierte Lichtstrahl fokussiert auf den Teilbereich (65) der Detektionsfläche (29) abgebildet wird,
    wobei insbesondere die Relativverfahrposition zum Aufnehmen des Bildes aus vorbekanntem Wissen über die Probe (51) ausgehend von der Bezugsrelativverfahrposition eingestellt wird.

10. Verfahren gemäß einem der vorangehenden Ansprüche, wobei der Lichtstrahl (19) ein paralleles Strahlenbündel aufweist, mit einem Querschnittsdurchmesser (d), der im Wesentlichen gleich der Apertur des Objektivs (3) ist.

11. Verfahren gemäß einem der vorangehenden Ansprüche, wobei zwischen einer Quelle (10) des Lichtstrahls (19) und dem Objektiv (3) zum Reflektieren des Lichtstrahls (19) durch das Objektivs hindurch ein dichroitischer oder nicht dichroitischer Strahlteiler (11, 11 a, 11 b) angeordnet Ist

12. Verfahren gemäß dem vorangehenden Anspruch, wobei der Strahlteiler (11b) eine Kellform aufweist, wobei sich Ebenen einer Vorderseite (91) und Rückseite (93) des Strahlteilers (11b) unter einem Kellwinkel (α) schneiden, der insbesondere zwischen 0,10° und 1° liegt.
    wobei der Keilwinkel (α) insbesondere derart gewählt ist, dass das Interferenzmuster, das sich aus der Überlagerung der Reflexionen an Vorderseite und Rückseite des Strahlteilers ergibt über die volle Apertur des Objektivs mindestens 10 Maxima bzw. Minima ausweist,
    und/oder
    wobei durch mindestens ein zusätzliches optisches Element die durch den, eine Keilform aufweisenden, Strahlteiler verursachten Abbildungsfehler korrigiert werden.

13. Verfahren gemäß einem der vorangehenden Ansprüche, wobei zwischen 1000 und 10000 mal in der Sekunde die Intensitätswerte der Pixel des Teilbereichs (65) während des relativen Verfahrens des Objektivs (3) und des Probenbereichs (2) ausgelesen werden, und/oder
    wobei ferner eine laterale Breite eines auf den Teilbereich (65) der Detektionsfläche (29) abgebildeten Reflexes des Lichtstrahls (19) bestimmt wird, um die Bezugsrelativverfahrposition zu bestimmen.

14. Verfahren gemäß einem der vorangehenden Ansprüche, wobei ein Transmissionsgitter (99) zwischen der Quelle (10) des Lichtstrahls (19) und Strahlteiler (11) angeordnet und derart ausgebildet ist, dass mindestens eine erste Beugungsordnung des Lichtstrahls (19) von der Grenzfläche reflektiert wird und auf den Teilbereich (65) der Detektionsfläche (29) abgebildet wird, wobei deren lateraler Abstand von einer nullten Beugungsordnung bestimmt wird, um eine Richtung einer Relativverschiebung zu bestimmen, in welcher eine Fokussierung des Reflexes von der Grenzfläche auf den Teilbereich erfolgt,
    wobei die Quelle (10) des Lichtstrahls (19) insbesondere eines der folgenden umfasst:

        einen Laser;

eine Superlumineszenzdiode;
einen Laser mit reduzierter Kohärenzlänge,

wobei ein Wellenlängenbereich des Lichtstrahls ferner insbesondere mit einem Fluoreszenzlichtwellenlängenbereich überlappt oder nicht überlappt und/oder Wellenlängen im Nah-infraroten umfasst und wobei der Wellenlängenbereich des Lichtstrahls Wellenlängen umfasst, die von der Detektionsfläche detektiert werden.

15. Mikroskopiesystem (100) zum Aufnehmen eines Bildes eines Probenbereichs (2), aufweisend:

ein Objektiv (3), das entlang einer optischen Achse (13) des Objektivs relativ zu dem Probenbereich (2) verfahrbar ist;
eine Lichtquelle (10), die ausgebildet ist, einen Lichtstrahl (19) durch das Objektiv (3) auf den Probenbereich (2) zu richten, der Insbesondere mindestens eine Grenzfläche (59) enthält:

eine Mikroskopkamera (8) mit einer Detektionsfläche (29), die ausgebildet ist. von Pixeln eines zweidimensionalen Teilbereichs (65) der Detektionsfläche (29) detektierte Intensitätswerte des aus dem Probenbereich reflektierten und durch das Objektiv (3) tretenden Lichtsstrahls (19) auszulesen;
einen Prozessor (33), der ausgebildet ist,
für eine jeweilige Relativverfahrposition das Maximums von über eine vorbestimmte Fläche (66) aggregierten Intensitätswerten der ausgelesenen Intensitätswerte innerhalb des Teilbereichs (65) zu bestimmen,
das Maximum mit der Relativverfahrposition zu assoziieren;
mindestens eine Bezugsrelativverfahrposition aus mindestens einem lokalen Maximum eines Verlaufs (67) der Maxima (73, 75, 77) in Abhängigkeit der Relativverfahrposition (Z) zu bestimmen,
eine Relativverfahrposition zum Aufnehmen eines Bildes basierend auf der Bezugsrelativverfahrposition zu bestimmen und
ein Antriebsmittel (15), um die Relativverfahrposition zum Aufnehmen eines Bildes einzustellen,
wobei die Mikroskopkamera (8) ferner ausgebildet ist, im Wesentlichen alle Pixel der Detektionsfläche (29) der Mikroskopkamera zum Aufnehmen des Bildes des Probenbereichs (2) auszulesen.

Fig. 1

Fig. 2

63

Fig.3

65a ↘    65b ↓    65c ↘

66

Z = -0,5 µm    Z = 0 µm    Z = +0,5 µm
$G_{max}$=153    $G_{max}$=223    $G_{max}$=58

Fig.4A    Fig.4B    Fig.4C    Fig.4D

73

71

1

67

76

77

2

3

Signal - Grauwert

250
200
150
100
50
0

2,2   2,22   2,24   2,26   2,28   2,3   2,32   2,34   2,36   2,38   2,4

Z-Position [mm]

79

69

Fig.5

Fig. 6

Fig. 7

Fig. 8

Fig. 9

Europäisches
Patentamt

European
Patent Office

Office européen
des brevets

# EUROPÄISCHER RECHERCHENBERICHT

Nummer der Anmeldung

EP 17 00 1037

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/090176 A1 (POSPIECH MATTHIAS [DE] ET AL) 30. März 2017 (2017-03-30) | 1-8,10, 11,13-15 | INV. G02B21/24 |
| Y | * Absätze [0056], [0003], [0052]; Anspruch 1; Abbildungen 1,4,5,6 * <br> * Absatz [0053] * <br> * Absatz [0055]; Abbildung 5 * <br> * Absatz [0059] * <br> * Absatz [0080]; Abbildung 14 * <br> ----- | 3,9,12 | |
| A | WO 2016/022359 A1 (CELLOMICS INC [US]) 11. Februar 2016 (2016-02-11) <br> * Absatz [0033]; Abbildungen 1,7 * <br> ----- | 1 | |
| A | WO 2015/197601 A1 (PERKINELMER CELLULAR TECHNOLOGIES GERMANY GMBH [DE]) 30. Dezember 2015 (2015-12-30) <br> * Abbildungen 1,4 * <br> ----- | 1 | |
| A | GB 2 355 354 A (AXON INSTR INC [US]) 18. April 2001 (2001-04-18) <br> * Seite 15, Zeile 4 - Zeile 29; Abbildung 2a * <br> ----- | 13 | |
| Y,D | DE 10 2014 002584 A1 (EUROIMMUN MEDIZINISCHE LABORDIAGNOSTIKA AG [DE]) 23. Juli 2015 (2015-07-23) <br> * Absatz [0050] - Absatz [0052]; Abbildungen 1,6 * <br> ----- | 9 | |
| Y | US 6 344 930 B1 (KANEKO TAKASHI [JP] ET AL) 5. Februar 2002 (2002-02-05) <br> * Spalte 7, Zeile 65 - Spalte 8, Zeile 38 * <br> ----- | 3 | |
| Y | US 7 433 129 B2 (LEICA MICROSYSTEMS [DE]) 7. Oktober 2008 (2008-10-07) <br> * Spalte 2, Zeile 4 - Zeile 16; Anspruch 3; Abbildung 1 * <br> ----- | 12 | |

RECHERCHIERTE SACHGEBIETE (IPC)

G02B

-/--

Der vorliegende Recherchenbericht wurde für alle Patentansprüche erstellt

| Recherchenort | Abschlußdatum der Recherche | Prüfer |
|---|---|---|
| München | 12. Dezember 2017 | Linke, Felix |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................
& : Mitglied der gleichen Patentfamilie, übereinstimmendes Dokument

EPO FORM 1503 03.82 (P04C03)

Seite 1 von 2

**Europäisches Patentamt**

**European Patent Office**

**Office européen des brevets**

**EUROPÄISCHER RECHERCHENBERICHT**

Nummer der Anmeldung

EP 17 00 1037

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2008/283723 A1 (FUJIMORI TADAYOSHI [JP] ET AL) 20. November 2008 (2008-11-20) * Absatz [0091] * ----- | 1 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 12. Dezember 2017 | Linke, Felix |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 00 1037

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-12-2017

| Im Recherchenbericht angeführtes Patentdokument | Datum der Veröffentlichung | Mitglied(er) der Patentfamilie | Datum der Veröffentlichung |
|---|---|---|---|
| US 2017090176 A1 | 30-03-2017 | DE 102015116452 A1<br>US 2017090176 A1 | 30-03-2017<br>30-03-2017 |
| WO 2016022359 A1 | 11-02-2016 | CN 107076964 A<br>CN 205958834 U<br>EP 3213136 A1<br>US 2016041380 A1<br>WO 2016022359 A1 | 18-08-2017<br>15-02-2017<br>06-09-2017<br>11-02-2016<br>11-02-2016 |
| WO 2015197601 A1 | 30-12-2015 | EP 3158385 A1<br>US 2017199367 A1<br>WO 2015197601 A1 | 26-04-2017<br>13-07-2017<br>30-12-2015 |
| GB 2355354 A | 18-04-2001 | KEINE | |
| DE 102014002584 A1 | 23-07-2015 | DE 102014002584 A1<br>WO 2015110250 A2 | 23-07-2015<br>30-07-2015 |
| US 6344930 B1 | 05-02-2002 | JP 3961729 B2<br>JP 2000316120 A<br>US 6344930 B1 | 22-08-2007<br>14-11-2000<br>05-02-2002 |
| US 7433129 B2 | 07-10-2008 | DE 102004058833 A1<br>JP 2006163402 A<br>US 2006119866 A1 | 08-06-2006<br>22-06-2006<br>08-06-2006 |
| US 2008283723 A1 | 20-11-2008 | JP 5172204 B2<br>JP 2008286584 A<br>KR 20080101715 A<br>TW 200912385 A<br>US 2008283723 A1 | 27-03-2013<br>27-11-2008<br>21-11-2008<br>16-03-2009<br>20-11-2008 |

EPO FORM P0461

Für nähere Einzelheiten zu diesem Anhang : siehe Amtsblatt des Europäischen Patentamts, Nr.12/82

**EP 3 418 789 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008015885 A1
- WO 2016133787 A1
- DE 102014002584